# EUROPÄISCHE PATENTSCHRIFT

(11) **EP 1 102 807 B1**
(45) Veröffentlichungstag und Bekanntmachung des Hinweises auf die Patenterteilung: **03.04.2002**
(21) Anmeldenummer: 99936512.5
(22) Anmeldetag: 12.07.1999
(51) Int. Cl.: C08J 9/00, C08J 9/16

(54) **VERFAHREN ZUR HERSTELLUNG BLÄHGRAPHITPARTIKEL ENTHALTENDER EXPANDIERBARER STYROLPOLYMERISATE**
METHOD FOR PRODUCING EXPANDABLE STYRENE POLYMERS CONTAINING EXFOLIATED GRAPHITE PARTICLES
PROCEDE DE FABRICATION DE POLYMERISATS DE STYRENE EXPANSIBLE RENFERMANT DES PARTICULES DE GRAPHITE GONFLANT

(30) Priorität: 27.07.1998 DE 19833664
(43) Veröffentlichungstag der Anmeldung: 30.05.2001
(73) Patentinhaber: BASF AKTIENGESELLSCHAFT, 67056 Ludwigshafen (DE)
(72) Erfinder: GLÜCK, Guiscard, D-55129 Mainz (DE)
(86) Internationale Anmeldenummer: EP9904867
(87) Internationale Veröffentlichungsnummer: WO0006635

(56) Entgegenhaltungen:
- EP-A- 0 245 779
- DE-U- 29 616 362

## Beschreibung

Die Erfindung betrifft ein Verfahren zur Herstellung Blähgraphitpartikel enthaltender expandierbarer Styrolpolymerisate.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und nachfolgendes Verschweißen der so hergestellten Schaumpartikel zu Formkörpern. Ein wichtiges Einsatzgebiet ist die Wärmedämmung im Bauwesen.

Es ist bekannt, daß die Wärmeleitfähigkeit von Schaumstoffen durch Einbau von athermanen Materialien, wie Ruß, Metalloxiden, Metallpulver oder Farbstoffpigmenten vermindert werden kann.

In der Patentanmeldung PCT/EP 97/02457 wird vorgeschlagen, zur Verminderung der Wärmeleitfähigkeit von Polystyrol-Schaumstoffen die Herstellung von expandierbaren Polystyrol-Partikeln durch Polymerisation von Styrol in wäßriger Suspension in Gegenwart von 0,05 bis 25 Gew.-% Graphitpartikeln durchzuführen. Handelsüblicher Graphit besitzt eine Dichte im Bereich von 2,1 bis 2,3 g/cm³. Nach PCT/EP 97/02457 wird die Polymerisation vorzugsweise mit einer Lösung von Polystyrol in Styrol durchgeführt. Diese Arbeitsweise erfordert aber einen zusätzlichen Verfahrensschritt, nämlich das Auflösen von Polystyrol in Styrol.

Der Erfindung lag daher die Aufgabe zugrunde, diesen Verfahrensschritt zu vermeiden und ein einfaches Verfahren zur Herstellung von Graphitpartikel enthaltenden expandierbaren Styrolpolymerisaten zu entwickeln.

Diese Aufgabe wird durch Einsatz von Partikeln aus geblähtem Blähgraphit mit einer Dichte von weniger als 1,5 g/cm³ gelöst.

Gegenstand der Erfindung ist demzufolge ein Verfahren zur Herstellung von Graphitpartikel enthaltenden, expandierbaren Styrolpolymerisaten (EPS) durch Polymerisation von Styrol, gegebenenfalls zusammen mit 20 % seines Gewichts an Comonomeren, in wässriger Suspension in Gegenwart von Graphitpartikeln und Zusatz eines Treibmittels vor, während oder nach der Polymerisation, wobei geblähter Blähgraphit mit einer Dichte von weniger als 1,5 g/cm³ eingesetzt wird.

Ein weiterer Gegenstand der Erfindung sind teilchenförmige expandierbare Styrolpolymerisate, die 0,05 bis 25 Gew.-% geblähter Blähgraphit mit einer Dichte von 0,1 bis 1,2 g/cm³ homogen verteilt enthalten.

Ungeblähter Blähgraphit mit einer Dichte von größer als 1,5 g/cm³ ist als Feuerschutzmittel für Schaumstoffe, insbesondere für Polyurethanschaumstoffe, sowie für ungeschäumte Styrolpolymerisate bekannt.

Aufgrund seiner Schichtgitterstruktur ist Graphit in der Lage, spezielle Formen von Einlagerungsverbindungen zu bilden. In diesen sogenannten Zwischengitterverbindungen sind Fremdatome oder -moleküle in z.T. stöchiometrischen Verhältnissen in die Räume zwischen den Kohlenstoffatomen aufgenommen worden. Diese Graphitverbindungen, z.B. mit Schwefelsäure als Fremdmolekül, die auch in technischem Maßstab hergestellt werden, werden als Blähgraphit bezeichnet. Die Dichte dieses Blähgraphits liegt im Bereich von 1,5 bis 2,1 g/cm³, die Teilchengröße bei 100 bis 1000 µm. Durch Erhitzen auf Temperaturen oberhalb von etwa 150°C, insbesondere auf 500 bis 1000°C, kann Blähgraphit gebläht werden, seine Dichte kann dabei bis auf Werte unterhalb von 0,01 g/cm³ erniedrigt werden. Dieser geblähte Blähgraphit enthält keine Fremdmoleküle mehr eingelagert, er kann beliebig fein gemahlen werden. Im Rahmen der vorliegenden Erfindung sind Partikel mit einer Dichte von 0,1 bis 1,2 g/cm³ bevorzugt; der mittlere Durchmesser der Partikel beträgt vorzugsweise 1 bis 200 µm, insbesondere 2 bis 50 µm.

Unter expandierbaren Styrolpolymerisaten werden Treibmittel enthaltende Styrolpolymerisate verstanden.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemäßen Suspensionspolymeriation können die üblichen Hilfsmittel, wie z.B. Peroxid-Initiatoren, Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyciododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsscabilisatoren anorganische Pickering-Dispergatoren, z.B. Magnesiumpyrophosphat oder Calciumphosphat einzusetzen.

Es hat sich gezeigt, daß es für die Stabilität der Suspension nicht notwendig ist, bei Beginn der Suspensionspolymerisation eine Lösung von Polystyrol einzusetzen.

Bevorzugt wird die Suspensionspolymerisation in zwei Temperaturstufen durchgeführt, wobei zunächst bei 80 bis 100°C ein bei niedrigen Temperaturen zerfallendes Peroxid, z.B. Dibenzoylperoxid, bevorzugt aber tert.-Butyl-peroxy-2-ethylhexanoat eingesetzt wird, und dann auf 110 bis 140°C erhitzt und mit einem bei höheren Temperaturen zerfallenden Peroxid, z.B. Dicumylperoxid, polymerisiert wird.

Die Blähgraphitpartikel werden bei der erfindungsgemäßen Suspensionspolymerisation bevorzugt in Mengen von 0,05 bis 25, insbesondere von 0,5 bis 8 Gew.-%, und ganz speziell von 1 bis 4 Gew.-%, bezogen auf das resultierende Styrolpolymerisat, zugegeben. Es ist grundsätzlich auch möglich, die Partikel erst im Verlauf der Suspensionspolymerisation zuzusetzen, bevorzugt während der ersten Hälfte des Polymerisationszyklus. Bei der Suspensionspolymerisation entstehen perlförmige, im wesentlichen runde Teilchen mit einem mittleren Durchmesser im Bereich von 0,2 bis 2 mm, in denen die Partikel homogen verteilt sind. Sie können mit den üblichen Beschichtungsmitteln, z.B. Metallstearaten, Glycerinestern und feinteiligen Silicaten beschichtet werden.

Die expandierbaren, geblähten Blähgraphit enthaltenden Styrolpolymerisate können zu Polystyrolschaumstoffen mit Dichten von 5 bis 35 g/cm³, bevorzugt von 8 bis 25 g/cm³ und insbesondere von 10 bis 15 g/cm³, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkorpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten. So kann durch Zusatz von 2 Gew.-% geblähtem Blähgraphit zu einem expandierbaren Styrolpolymerisat bei einer Dichte des Schaumstoffs von 10 g/cm³ die Wärmeleitfähigkeit von 44 mW/m·K auf uncer 35 mW/m·K gesenkt werden.

Durch die Möglichkeit, bei gleicher Wärmeleitfähigkeit die Dichte der Styrolpolymerisate deutlich zu verringern, lassen sich Materialeinsparungen realisieren. Da im Vergleich mit herkömmlichen expandierbaren Styrolpolymerisaten die gleiche Wärmedämmung mit wesentlich geringeren Schüttdichten erreicht werden kann, können mit dem erfindungsgemäß hergestellten expandierbaren Polystyrolpartikeln dünnere Schaumstoffplatten eingesetzt werden, was eine Raumeinsparung und insbesondere eine Materialeinsparung ermöglicht.

Ferner ist es möglich, durch Zusatz von geblähtem Blähgraphit wegen des stark vergrößerten Volumenanteils mit relativ geringen Mengen, z.B. mit 5 bis 15 Gew.-%, EPS-Schaumstoffe mit antistatischen Eigenschaften und elektrischer Leitfähigkeit herzustellen.

Die Erfindung soll an nachstehenden Beispielen näher erläutert werden.

### Beispiele

### Beispiel 1: Wärmeleitfähigkeit

In 20,4 kg Styrol werden 200 g pulverförmiger geblähter Blähgraphit der Dichte 1,0 g/cm³ und einer mittleren Teilchengröße von 10 µm, d.h. 1 Gew.-% Graphit, bezogen auf die Styrolmenge, homogen suspendiert unter Beimischung von 85,0 g Dicumylperoxid und 13,6 g tert.-Butylperoxy-2-ethylhexanoat. Die organische Phase wird in 19,5 l vollentsalztes Wasser in einem 50-l-Rührkessel eingebracht. Die wäßrige Phase enthält 46,6 g Natriumpyrophosphat und 86,3 g Magnesiumsulfat (Bittersalz). Man erhitzt die Suspension auf 80°C. Nach 140 Minuten wird 2,34 g Emulgator K 30/40 (Bayer AG) zugegeben. Nach weiteren 30 Minuten wird 1277,1 g Pentan nachdosiert und bei 134°C auspolymerisiert.

Man erhält ein perlförmiges Granulat, welches zu Schaumstorrplatten einer Dichte von 15 g/cm³ ausgeschäumt wurde und eine Wärmeleitfähigkeit von 32 g/cm³ erreichte.

### Beispiel 2: Antistatik

In 20,4 kg Styrol werden 1000 g pulverförmiger geblähter Blähgraphit der Dichte 0,05 g/cm³ und einer mittleren Teilchengröße von 20 µm, d.h. 1,0 Gew.-% Graphit, bezogen auf die Styrolmenge homogen suspendiert unter Beimischung von 85,0 g Dicumylperoxid und 13,6 g tert.-Butylperoxy-2-ethylhexanoat. Die organische Phase wird in 19,5 l vollentsalztes Wasser in einem 50-l-Rührkessel eingebracht. Die wäßrige Phase enthält 46,6 g Natriumpyrophosphat und 86,3 g Magnesiumsulfat (Bittersalz). Man erhitzt die Suspension auf 80°C. Nach 140 Minuten wird 2,34 g Emulgator K 30/40 (Bayer AG) zugegeben. Nach weiteren 30 Minuten wird 1277,1 g Pentan nachdosiert und bei 134°C auspolymerisiert.

Man erhält ein perlförmiges Granulat, welches einen spezifischen Durchgangswiderstand von 1,8 x 10⁵ Ω aufweist. (Zum Vergleich ohne Graphitzusatz: > 10¹⁴ Ω).

## Patentansprüche

1. Verfahren zur Herstellung von Graphitpartikel enthaltenden, expandierbaren Styrolpolymerisaten (EPS) durch Polymerisation von Styrol, gegebenenfalls zusammen mit 20 % seines Gewichts an Comonomeren, in wäßriger Suspension in Gegenwart von Graphitpartikeln und Zusatz eines Treibmittels vor, während oder nach der Polymerisation, **dadurch gekennzeichnet, daß** als Graphitpartikel geblähter Blähgraphit mit einer Dichte von weniger als 1,5 g/cm³ eingesetzt wird.

2. Verfahren nach Anspruch 1. **dadurch gekennzeichnet, daß** man die Polymerisation in Gegenwart von 0,05 bis 25 Gew.-%, vorzugsweise von 0,5 bis 8 Gew.-%, geblähter Blähgraphit, bezogen auf Styrolpolymerisat, durchführt.

3. Verfahren nach Anspruch 1, **dadurch gekennzeichnet, daß** geblähter Blähgraphit mit einer Dichte von 0,1 bis 1,2 g/cm³ eingesetzt wird.

4. Verfahren nach Anspruch 3, **dadurch gekennzeichnet, daß** geblähter Blähgraphit mit einem mittleren Partikeldurchmesser von 1 bis 200 µm eingesetzt wird.

5. Teilchenförmige expandierbare Styrolpolymerisate, die 0,05 bis 25 Gew.-% Graphitpartikel homogen verteilt enthalten, **dadurch gekennzeichnet, daß** sie geblähten Blähgraphit mit einer Dichte von 0,1 bis 1,2 g/cm³ enthalten.

6. Verwendung der teilchenförmigen expandierbaren Styrolpolymerisate nach Anspruch 5 zur Herstellung von Schaumstoffen mit einer Dichte von 5 bis 35 g/cm³.

## Claims

1. A process for preparing expandable styrene polymers (EPS) containing graphite particles by polymerization of styrene, optionally together with 20% of its weight of comonomers, in aqueous suspension in the presence of graphite particles and with addition of a blowing agent before, during or after the polymerization, wherein the graphite particles used are expanded expandable graphite having a density of less than 1.5 g/cm³.

2. A process as claimed in claim 1, wherein the polymerization is carried out in the presence of from 0.05 to 25% by weight, preferably from 0.5 to 8% by weight, of expanded expandable graphite, based on styrene polymers.

3. A process as claimed in claim 1, wherein expanded expandable graphite having a density of from 0.1 to 1.2 g/cm³ is used.

4. A process as claimed in claim 3, wherein expanded expandable graphite having a mean particle diameter of from 1 to 200 µm is used.

5. A particulate expandable styrene polymer containing from 0.05 to 25% by weight of homogeneously distributed expanded expandable graphite particles having a density of from 0.1 to 1.2 g/cm³.

6. The use of a particulate expandable styrene polymer as claimed in claim 5 for producing foams having a density of from 5 to 35 g/l.

## Revendications

1. Procédé de préparation de polymères de styrène expansibles (EPS), contenant des particules de graphite, par polymérisation de styrène, éventuellement conjointement avec 20% de son poids de comonomères, en suspension aqueuse en présence de particules de graphite et avec addition d'un agent gonflant avant, pendant ou après la polymérisation, **caractérisé en ce que**, comme particules de graphite, du graphite expansé ayant une densité inférieure à 1,5 g/cm³ est mis en oeuvre.

2. Procédé suivant la revendication 1, **caractérisé en ce qu'**on effectue la polymérisation en présence de 0,05 à 25% en poids, de préférence de 0,5 à 8% en poids, de graphite expansé, par rapport au polymère de styrène.

3. Procédé suivant la revendication 1, **caractérisé en ce qu'**on met en oeuvre du graphite expansé ayant une densité de 0,1 à 1,2 g/cm³.

4. Procédé suivant la revendication 3, **caractérisé en ce qu'**on met en oeuvre du graphite expansé ayant un diamètre moyen des particules de 1 à 200 µm.

5. Polymères de styrène expansibles, en forme de particules, contenant d'une manière répartie de façon homogène, 0,05 à 25% en poids de particules de graphite, **caractérisés en ce qu'**ils contiennent du graphite expansé ayant une densité de 0,1 à 1,2 g/cm³.

6. Utilisation des polymères de styrène expansibles, en forme de particules, suivant la revendication 5, pour la préparation de mousses ayant une densité de 5 à 35 g/cm³.
